# EUROPÄISCHE PATENTANMELDUNG

(11) **EP 2 919 218 A2**
(43) Veröffentlichungstag der Anmeldung: **16.09.2015**
(21) Anmeldenummer: 15000658.3
(22) Anmeldetag: 06.03.2015
(51) Int. Cl.: G08G 1/16, G08G 1/0962

(54) **Verfahren zur Fahrerinformation in einem Kraftfahrzeug**

(30) Priorität: 15.03.2014 DE 102014003784
(71) Anmelder: AUDI AG, 85045 Ingolstadt (DE)
(72) Erfinder: Mesow, Lars, DE - 85098 Großmehring - Demling (DE)
(74) Vertreter: Herbst, Matthias Heinz

(57) **Zusammenfassung**

Verfahren zur Fahrerinformation in einem Kraftfahrzeug, umfassend eine Anzeigeeinrichtung zur Darstellung einer an den Fahrer zu gebenden Fahrerinformation mit zugeordneter Steuereinrichtung, und eine Umfelderfassungseinrichtung zur Erfassung einer Umfeldinformation, wobei die Anzeigeeinrichtung durch die Steuereinrichtung zur Anzeige der Fahrerinformation und der Umfeldinformation angesteuert wird, wobei
- entweder die Fahrerinformation in einem zentralen Bereich der Anzeigeeinrichtung und die Umfeldinformation in einem den zentralen Bereich umgebenden randseitigen Bereich der Anzeigeeinrichtung dargestellt wird,
- oder wobei die Fahrerinformation und die Umfeldinformation überlagert im gleichen gemeinsamen Bereich der Anzeigeeinrichtung dargestellt werden, wobei die Fahrerinformation zumindest teilweise transparent im Vordergrund und die Umfeldinformation als Hintergrund dargestellt wird.

## Beschreibung

Die Erfindung betrifft ein Verfahren zur Fahrerinformation in einem Kraftfahrzeug, umfassend eine Anzeigeeinrichtung zur Darstellung einer an den Fahrer zu gebende Fahrerinformation mit zugeordneter Steuereinrichtung und eine Umfelderfassungseinrichtung zur Erfassung einer Umfeldinformation.

In Kraftfahrzeugen werden zunehmend Multifunktionsanzeigen genutzt, um die vielseitigen Anzeigemöglichkeiten und Eingabemöglichkeiten in einem Kraftfahrzeug durch wenige und einfache Bedienelemente abzubilden. Dabei werden derartige Anzeigeeinrichtungen insbesondere für Infotainmentfunktionen, also zum Abrufen von Medieninhalten, zur Steuerung von Kommunikationseinrichtungen und zur Ausgabe von Informationen, insbesondere den Informationen eines Navigationssystems genutzt. Es ist auch bekannt, über derartige Systeme detaillierte Fahrzeugeinstellungen, beispielsweise ein Umschalten zwischen einer sportlichen und einer besonders sparsamen Konfiguration des Kraftfahrzeugs, zu ermöglichen. Zur Bedienung werden bevorzugt menübasierte Bediensysteme genutzt.

Dabei richtet ein Fahrer, beispielsweise zur Wahl eines Radiosenders, möglicherweise im laufenden Fahrbetrieb den Blick auf die Anzeigeeinrichtung. Sind in einem Kraftfahrzeug zumindest teilautomatisierte Fahrfunktionen, wie ein automatisches Pilotieren im Stau oder Ähnliches, vorgesehen, ist es auch möglich, dass der Fahrer seinen Blick für etwas längere Zeiträume vom Fahrgeschehen löst und auf eine entsprechende Anzeigeeinrichtung richtet.

Dabei ist nachteilig, dass der Fahrer während eines Blicks auf die Anzeigeeinrichtung keine visuellen Informationen über das Umfeld des Kraftfahrzeugs erhält. Ist eine Fahrübernahme des Fahrers notwendig, bzw. treten unerwartete Situationen auf, so muss der Fahrer sich schnell wieder visuell über das Umfeld des Kraftfahrzeugs informieren.

Der Erfindung liegt damit die Aufgabe zugrunde, ein Verfahren zur Fahrerinformation anzugeben, das, insbesondere bezüglich einer Information des Fahrers über das Umfeld des Kraftfahrzeugs, demgegenüber verbessert ist.

Die Aufgabe wird erfindungsgemäß durch ein Verfahren der eingangs genannten Art gelöst, wobei die Anzeigeeinrichtung durch die Steuereinrichtung zur Anzeige der Fahrerinformation und der Umfeldinformation angesteuert wird, wobei
- entweder die Fahrerinformation in einem zentralen Bereich der Anzeigeeinrichtung und die Umfeldinformation in einem den zentralen Bereich umgebenden randseitigen Bereich der Anzeigeeinrichtung dargestellt wird,
- oder wobei die Fahrerinformation und die Umfeldinformation überlagert im gleichen gemeinsamen Bereich der Anzeigeeinrichtung dargestellt werden, wobei die Fahrerinformation zumindest teilweise transparent im Vordergrund und die Umfeldinformation als Hintergrund dargestellt wird.

Erfindungsgemäß wird damit vorgeschlagen, eine Umfeldinformation derart anzuzeigen, dass sie bei einem Blick des Fahrers auf die Anzeigeeinrichtung zur Erfassung der Fahrerinformation sofort erkennbar ist. Die Fahrerinformation kann dabei insbesondere eine Ausgabe eines menübasierten Bediensystems sein. Es ist aber auch möglich, dass die Fahrerinformation eine Mediendarstellung, die Anzeige eines Navigationsgerätes oder Ähnliches ist. Die Fahrerinformation kann insbesondere durch ein Multifunktionssystem bereitgestellt werden, das eine Vielzahl von Funktionen bereitstellt, wie Unterhaltungsfunktionen, also insbesondere den Zugriff auf Medieninhalte, wie Radio, Musiksammlungen und Videos, ermöglicht, Kommunikationsfunktionen, insbesondere Telefon- und Adressbuchfunktionen, Navigationsfunktionen und Einstellfunktionen, mit denen Parameter des Kraftfahrzeugs einstellbar sind.

Die Umfelderfassungseinrichtung erfasst dabei Informationen zahlreicher Fahrzeugsensoren, wie Ultraschallsensoren, Kameras und Radarsensoren. Die Umfeldinformation kann dabei direkt eine Ausgabe eines Sensors, beispielsweise ein Kamerabild, sein. Insbesondere kann die Umfeldinformation jedoch durch Auswertung der Daten mehrerer Sensoren und optional weiterer Daten ermittelt werden. Dabei kann die Umfelderfassungseinrichtung insbesondere einem Faherassistenzsystem zugeordnet sein, das Verkehrssituationen erkennen und bewerten kann und für das gesamte Fahrzeugumfeld oder Bereiche des Fahrzeugumfelds Gefahrensituationen erkennen kann. Die Umfeldinformation kann dabei insbesondere erkannte Gefahrsituationen betreffen.

Die Umfeldinformation kann ferner für wenigstens zwei vorgegebene Umfeldbereiche des Fahrzeugumfelds jeweils eine Gefahrinformation umfassen, die insbesondere durch Erkennung von Objekten im Fahrzeugumfeld bestimmt ist, wobei jedem der Umfeldbereiche entweder ein Anzeigesegment des randseitigen Bereichs der Anzeigeeinrichtung oder, bei überlagerter Darstellung, ein Anzeigesegment des Hintergrunds zugeordnet ist, das jeweils zur Darstellung der Gefahrinformation angesteuert wird. Die verschiedenen Anzeigesegmente können dabei räumlich voneinander getrennt sein, es ist jedoch auch ein teilweises Überlappen der Anzeigesegmente möglich. Die Gefahrinformation kann insbesondere ein Abstand zu einem erkannten Objekt, beispielsweise einem weiteren Kraftfahrzeug oder einem Fußgänger sein. Es ist jedoch auch möglich, dass die Gefahrinformation die Abstände von erkannten Objekten mit weiteren Parametern gewichtet. So kann insbesondere die Bewegungsrichtung eines erkannten Objekts und/oder die Art eines erkannten Objekts berücksichtigt werden. Verfahren zur Erkennung und Bewertung von Gefahrsituationen im Kraftfahrzeugumfeld sind grundsätzlich im Stand der Technik bekannt und sollen daher hier nicht detailliert dargestellt werden.

Dabei können die Anzeigesegmente Winkelsegmente des randseitigen Bereichs oder, bei überlagerter Darstellung, des Hintergrunds sein. Alternativ oder ergänzend ist es möglich, dass die Anzeigesegmente Längsabschnitte des randseitigen Bereichs sind. Insbesondere können die Umfeldbereich umlaufend um das Kraftfahrzeug angeordnet sein und im speziellen Umfeldwinkelsegmente sein. Zur intuitiven Zuordnung der jeweiligen Anzeigesegmente zu den Umfeldbereichen ist es dabei möglich, dass die Position des Anzeigesegments auf der Anzeigeeinrichtung mit dem Ort des Umfeldbereichs korreliert. Insbesondere kann ein im oberen Bereich der Anzeigeeinrichtung angeordnetes Anzeigesegment einem im Vorfeld des Kraftfahrzeugs liegenden Bereich zugeordnet sein. Links bzw. rechts in der Anzeigeeinrichtung angeordnete Anzeigesegmente können Umfeldbereichen links bzw. rechts vom Kraftfahrzeug zugeordnet sein. Anzeigesegmente im unteren Bereich der Anzeigeeinrichtung können Bereichen im Rückraum des Kraftfahrzeugs zugeordnet sein.

Die Gefahrinformation kann als Farbdarstellung und/oder durch Anpassung der Leuchtstärke im jeweiligen Anzeigesegment dargestellt werden. Dabei kann beispielsweise, wenn in einem Umfeldbereich keine Gefahrensituation erkannt wird, das entsprechende Anzeigesegment nicht beleuchtet sein und bei Erkennung einer Gefahrensituation das entsprechende Anzeigesegment durch Erhöhen der Leuchtstärke beleuchtet werden. Dabei kann insbesondere ein farbiges Leuchten, beispielsweise in Rot vorgesehen sein. In einer alternativen Ausführungsmöglichkeit können insbesondere drei verschiedene Farben, beispielsweise Grün, Gelb und Rot genutzt werden, um verschiedene Gefährlichkeiten einer Situation in einem dem jeweiligen Anzeigesegment zugeordneten Umfeldbereich darzustellen. Dabei ist es auch möglich, die Darstellung in einem Anzeigesegment in Abhängigkeit der Gefahrinformation zeitabhängig zu variieren. Insbesondere kann eine Gefahrinformation durch Blinken dargestellt werden, beispielsweise um eine akute Gefahrsituation zu visualisieren.

Dabei kann insbesondere im gesamten jeweiligen Anzeigesegment eine einfarbige Darstellung mit einer in Abhängigkeit der Gefahrinformation vorgegebenen Farbe und/oder Leuchtstärke erfolgen.

Ergänzend zur visuellen Darstellung können Gefahrinformationen auch durch einen akustischen und/oder haptischen Hinweis an den Fahrer mitgeteilt werden.

Der zentrale und der randseitige Bereich können auf einem gemeinsamen Display dargestellt werden. Dabei kann das gemeinsame Display insbesondere rechteckig mit in Zeilen und Spalten angeordneten Bildpunkten sein, wobei am linken und rechten Rand des Displays jeweils eine vorgegebene Anzahl von Spalten und am oberen und unteren Rand des Displays jeweils eine vorgegebene Anzahl von Zeilen durch die Steuerungseinrichtung als randseitiger Bereich angesteuert werden. Der randseitige Bereich kann dabei verschiedenartig in Anzeigesegmente geteilt werden. Vorteilhaft kann im oberen, unteren, linken und rechten randseitigen Bereich jeweils wenigstens ein separates Anzeigesegment vorgesehen sein. Ergänzend oder alternativ können Anzeigesegmente an den Ecken des Displays vorgesehen sein.

Alternativ kann als Anzeigeeinrichtung eine Anzeigeeinrichtung verwendet werden, die ein zentrales, insbesondere grafikfähiges, Display und mehrere randseitig angeordnete Leuchtmittel umfasst, wobei die Fahrerinformation durch Ansteuerung des Displays und die Umfeldinformation durch Ansteuerung der randseitig angeordneten Leuchtmittel dargestellt wird. Als Leuchtmittel können dabei Leuchtdioden, insbesondere organische Leuchtdioden genutzt werden. Insbesondere können die Leuchtmittel als Leuchtstreifen ausgebildet sein, die speziell umlaufend um das zentrale Display angeordnet sind. Dabei können für jede Seite des Displays wenigstens ein, vorzugsweise wenigstens zwei, Leuchtmittel vorgesehen sein.

Daneben betrifft die Erfindung ein Kraftfahrzeug, umfassend eine Anzeigeeinrichtung zur Darstellung einer an den Fahrer zu gebenden Fahrerinformation mit zugeordneter Steuereinrichtung, und eine Umfelderfassungseinrichtung zur Erfassung einer Umfeldinformation, wobei das Kraftfahrzeug zur Durchführung des erfindungsgemäßen Verfahrens ausgebildet ist. Weitere Informationen zu der Funktion der einzelnen Komponenten des Kraftfahrzeugs sowie Möglichkeiten zur Weiterbildung des erfindungsgemäßen Kraftfahrzeugs ergeben sich dabei aus der vorangehenden Beschreibung des Verfahrens.

Es ist dabei insbesondere vorteilhaft, wenn das Kraftfahrzeug zumindest zum teilautomatisierten, insbesondere zum vollautomatisierten, Fahren ausgebildet ist. Bei einer Teilautomatisierung des Kraftfahrzeugs ist davon auszugehen, dass ein Fahrer auch über längere Zeiträume eine Anzeigeeinrichtung nutzt. In einzelnen Fahrsituationen kann dennoch ein Eingreifen des Fahrers erforderlich sein. Da im erfindungsgemäßen Kraftfahrzeug stets eine schematische Darstellung der Fahrsituation für den Fahrer durch die erfindungsgemäße Darstellung von Umfeldinformationen erfolgt, ist der Fahrer bereits beim Blick auf das Display über die wesentlichen Merkmale der momentanen Fahrsituation informiert und kann damit schneller und effizienter reagieren.

Weitere Vorteile und Einzelheiten der Erfindung ergeben sich aus den folgenden Ausführungsbeispielen sowie den zugehörigen Zeichnungen. Dabei zeigen:
- Fig. 1: schematisch eine Darstellung auf einer Anzeigeeinrichtung bei der Durchführung eines Ausführungsbeispiels des erfindungsgemäßen Verfahrens,
- Fig. 2: eine Verkehrssituation,
- Fig. 3 und 4: jeweils schematische Darstellungen von weiteren Anzeigeeinrichtungen während weiterer Ausführungsbeispiele des erfindungsgemäßen Verfahrens, und
- Fig. 5: ein erfindungsgemäßes Kraftfahrzeug.

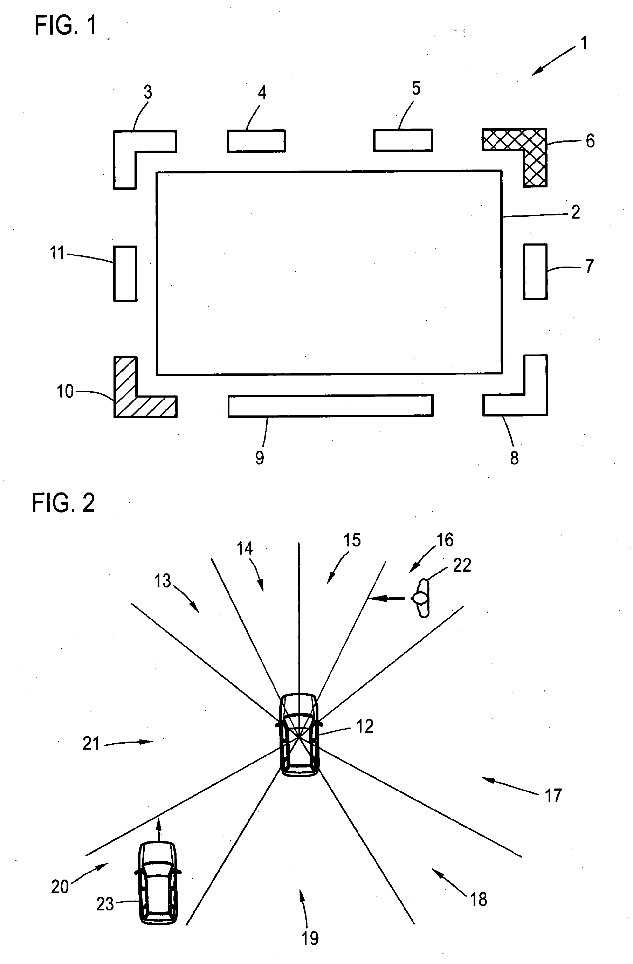

Fig. 1 zeigt eine schematische Darstellung einer Anzeigeeinrichtung während der Durchführung eines Verfahrens zur Fahrerinformation, wobei im gezeigten Zustand der Anzeigeeinrichtung die in Fig. 2 gezeigte Verkehrssituation vorliegt. Die Anzeigeeinrichtung 1 umfasst dabei ein zentrales grafikfähiges Display 2, auf dem eine nicht gezeigte Fahrerinformation dargestellt wird. Bei der Fahrerinformation handelt es sich um die Ausgabe eines Multifunktionssystems, das menübasiert ist und einem Fahrer eine Vielzahl von Funktionen wie Kommunikationsfunktionen, Navigationsfunktionen, Unterhaltungsfunktionen und Einstellfunktionen zur Einstellung von Kraftfahrzeugparametern bereitstellt. Daneben umfasst die Anzeigeeinrichtung 1 einen randseitigen Bereich, der durch die Anzeigesegmente 3, 4, 5, 6, 7,8, 9, 10, 11 gebildet ist. Durch diese werden Umfeldinformationen dargestellt, die durch eine Umfelderfassungseinrichtung erfasst wurden. Die Anzeigesegmente 3 bis 11 sind dabei durch separat steuerbare Leuchtmittel, die LEDs umfassen und als Leuchtstreifen ausgebildet sind, gebildet.

Die Umfelderfassungseinrichtung ist dabei einem Fahrerassistenzsystem zugeordnet, das Objekte im Fahrzeugumfeld erfasst und in Abhängigkeit der Position des Objekts, der Bewegungsrichtung des Objekts und der Art des Objekts eine Gefährdung durch dieses Objekt bestimmt. Dies wird im Folgenden mit Bezug auf die in Fig. 2 gezeigte Fahrsituation erläutert.

Das Kraftfahrzeug 12 bewegt sich auf einer nicht gezeigten Straße, während sich ein Fußgänger 22 im Vorderbereich des Kraftfahrzeugs in Richtung des Fahrschlauchs des Kraftfahrzeugs bewegt und während ein weiteres Kraftfahrzeug 23 das Kraftfahrzeug 12 überholt. Das Kraftfahrzeug 12 umfasst zahlreiche nicht gezeigte Sensoren (Ultraschall, Radar, Kamera), durch die Objekte im Umfeld, wie der Fußgänger 22 und das Kraftfahrzeug 23, erfasst werden. Ein zugeordnetes Fahrerassistenzsystem ist ausgebildet für mehrere Umfeldbereiche 13, 14, 15, 16, 17, 18, 19, 20, 21 jeweils eine Gefahrinformation zu ermitteln, die beschreibt, ob eine Gefahrsituationen in dem jeweiligen Umfeldbereich 13 bis 21 vorliegt oder nicht. Dabei wird jedem der Bereich 13 bis 21 als Gefahrinformation eine dreistufige Gefahrinformation zugeordnet, die beschreibt, dass keine, eine geringe oder eine größere Gefahr vorliegt.

In den Umfeldbereichen 13, 14, 15, 17, 18, 19 und 21 werden durch die Umfelderfassungseinrichtung keine Objekte erkannt, und es liegt auch kein anderes Indiz vor, dass eine Gefahr aus diesen drohen könnte. Für den Umfeldbereich 16 wird eine höhere Gefährdung ermittelt, da ein Fußgänger 22 erkannt wird, der sich unmittelbar in den Fahrschlauch des Kraftfahrzeugs 12 bewegt. Für den Umfeldbereich 20 wird aufgrund der Erkennung des Kraftfahrzeugs 23 eine geringe Gefahr als Gefahrinformation ermittelt, da bei einer kontinuierlichen Weiterfahrt des Kraftfahrzeugs 12 und des Kraftfahrzeugs 23 keinerlei Gefahr droht. Der Fahrer des Kraftfahrzeugs 12 soll dennoch auf das Kraftfahrzeug 23 hingewiesen werden, da ein Ausscheren aufgrund des Kraftfahrzeugs 23 problematisch sein kann.

Die für jeden der Umfeldbereiche 13 bis 21 ermittelte Gefahrinformation wird jeweils in einem der Anzeigesegmente 3 bis 11 dargestellt. Dabei ist das Anzeigesegment 3 dem Umfeldbereich 13, das Anzeigesegment 4 dem Umfeldbereich 14 usw. zugeordnet. Die Darstellung der Gefahrinformation erfolgt dabei durch eine Farbdarstellung, wobei eine geringe Gefahr durch ein gelbes Leuchten und eine höhere Gefahr durch ein rotes Leuchten dargestellt werden. Entsprechend wird das dem Anzeigesegment 10 zugeordnete Leuchtmittel angesteuert um gelb zu leuchten, um eine geringe Gefahr im Umfeldbereich 20 darzustellen. Das dem Anzeigesegment 6 zugeordnete Leuchtmittel leuchtet rot um eine größere Gefahr im Umfeldbereich 16 darzustellen.

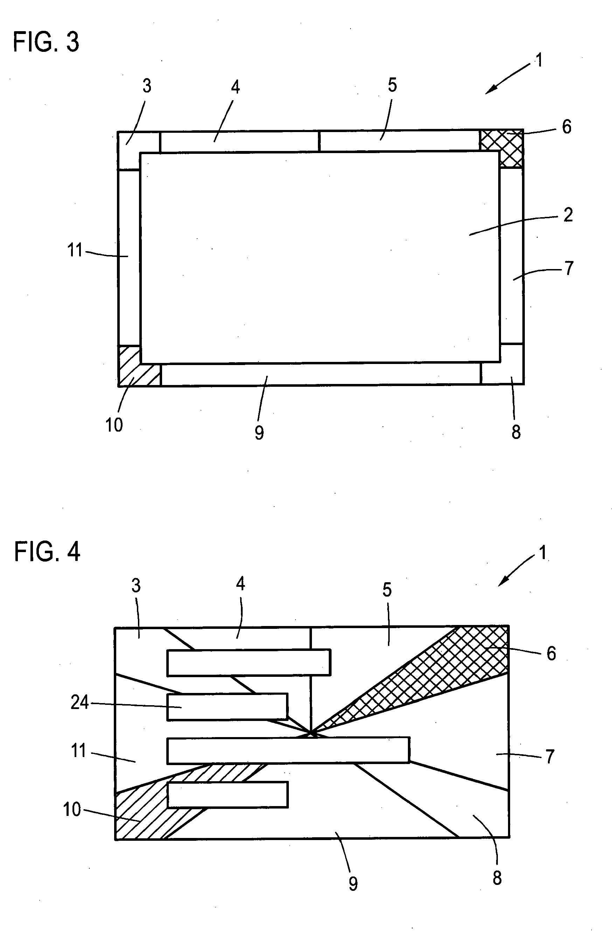

Fig. 3 zeigt schematisch eine Darstellung auf einer Anzeigeeinrichtung 1 in einem weiteren Ausführungsbeispiel eines Verfahrens zur Fahrerinformation. Im Gegensatz zum mit Bezug auf Fig. 1 erläuterten Verfahren wird eine Anzeigeeinrichtung 1 genutzt, bei der der zentrale Bereich 2 und der randseitige Bereich, der durch die Anzeigesegmente 3 bis 11 gebildet ist, auf einem gemeinsamen Display dargestellt werden. Dabei ist das gemeinsame Display rechteckig und weist in Zeilen und Spalten angeordnete Bildpunkte auf. Am linken und rechten Rand des Displays ist jeweils eine vorgegebene Zahl von Spalten und am oberen und unteren rand des Displays eine vorgegebene Anzahl von Zeilen vorgesehen, die durch die nicht gezeigte Steuereinrichtung als randseitiger Bereich angesteuert werden.

In der dargestellten Situation liegt ebenfalls die in Fig. 2 gezeigte Verkehrssituation vor. Die Ansteuerung der Anzeigesegmente 3 bis 11 entspricht der in Fig. 1 dargestellten Ansteuerung, bei der das Anzeigesegment 6 rot, das Anzeigesegment 10 gelb und die weiteren Anzeigesegmente nicht beleuchtet sind. Im Gegensatz zur Fig. 1 werden jedoch keine separaten Leuchtmittel genutzt, sondern die jeweils dem Anzeigesegment 3 bis 11 zugeordneten Bildpunkte entsprechend angesteuert.

Fig. 4 zeigt eine Anzeigeeinrichtung 1 bei Durchführung eines weiteren Ausführungsbeispiels eines Verfahrens zur Fahrerinformation. Im Gegensatz zu dem mit Bezug auf Fig. 1 und Fig. 3 beschriebenen Verfahren erfolgt die Darstellung der Umfeldinformation nicht in einem randseitigen Bereich der Anzeigeeinrichtung, sondern es wird ein gemeinsamer Bereich zur Darstellung genutzt. Die Fahrerinformation 24 wird dabei zumindest teilweise transparent im Vordergrund dargestellt. Als Fahrerinformation 24 sind schematisch mehrere Zeilen Text eines menübasierten Bediensystems dargestellt. Die Umfeldinformation, die hier wie bereits zu Fig. 1 und Fig. 3 erläutert eine Gefahrinformation ist, die wie zu Fig. 2 erläutert ermittelt wurde, wird dabei als Hintergrund dargestellt. Dabei sind die Anzeigesegmente 3 bis 11 als Winkelsegmente der Anzeige ausgebildet, deren Farbe in Abhängigkeit der Gefahrinformation anpassbar ist. Die in Fig. 4 gezeigten Linien zwischen den Anzeigesegmenten 3 bis 11 werden dabei nicht dargestellt, sondern es erfolgt nur dann eine Darstellung, wenn eine geringe bzw. größere Gefahr ermittelt wird. Entspricht wird als Hintergrundfarbe im Anzeigesegment 6 Rot und im Anzeigesegment 10 Gelb vorgegeben. In den weiteren Anzeigesegmenten 3, 4, 5, 7, 8, 9, 11 wird eine Hintergrundfarbe angezeigt, die keine Gefahr anzeigt, beispielsweise Grün oder Schwarz.

Dabei ist es in den zu Fig. 1, 3 und 4 erläuterten Ausführungsbeispielen selbstverständlich möglich, eine verschiedene Anzahl von Abstufungen für die Gefahrinformation vorzusehen und entsprechend mehr oder weniger Farben zur Anzeige zu nutzen. Ergänzend oder alternativ kann dabei auch in Abhängigkeit der Gefahrinformation die Leuchtstärke variiert werden. Auch ein Blinken einzelner Anzeigesegmente bei akuter Gefahr im zugeordneten Bereich des Kraftfahrzeugumfeld ist möglich. Insbesondere bei einer überlagerten Darstellung der Fahrerinformation und der Umfeldinformationen in einem gemeinsamen Bereich, wobei die Umfeldinformation als Hintergrund dargestellt wird, wäre es alternativ auch möglich, Bilder einer am Kraftfahrzeug angeordneten Kamera oder andere Sensordaten direkt als Hintergrund darzustellen.

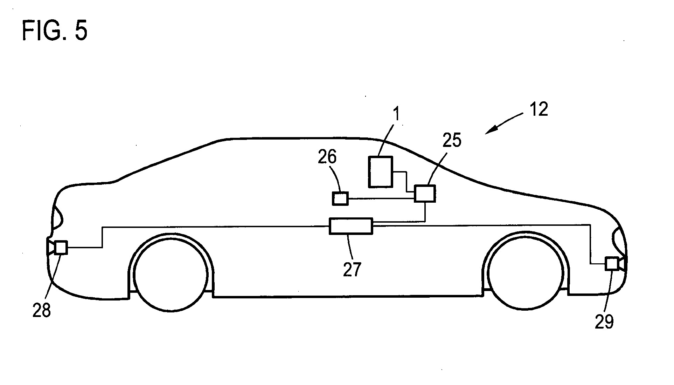

Fig. 5 zeigt ein erfindungsgemäßes Kraftfahrzeug 12. Die Anzeigeeinrichtung 1 des Kraftfahrzeugs dient zur gleichzeitigen Darstellung von Fahrerinformationen und Umfeldinformationen, wie zu Fig. 1, 3 und 4 erläutert. Hierzu wird die Anzeigeeinrichtung 1 durch eine zugeordnete Steuereinrichtung 25 angesteuert. Die Steuereinrichtung 25 nutzt die Anzeigeeinrichtung 1 insbesondere um ein menügeführtes Bediensystem darzustellen. Zur Bedienung dieses Bediensystems ist im Kraftfahrzeug 12 zusätzlich ein Bedienelement 26, beispielsweise ein Dreh-Drück-Steller, vorgesehen. Ergänzend kann die Steuereinrichtung 25 auf der Anzeigeeinrichtung 1 auch Medien- und Navigationsinformationen darstellen.

Um bei einer Nutzung der Anzeigeeinrichtung 1 eine Information des Fahrers über das Fahrzeugumfeld zu ermöglichen, werden der Steuereinrichtung 25 durch die Umfelderfassungseinrichtung 27 Umfeldinformationen zugeführt. Die Umfeldinformationen werden dabei durch Auswertung von zahlreichen Sensorsignalen, wovon beispielhaft eine Rückraumkamera 28 und ein Radarsensor 29 gezeigt sind, ermittelt. Die Umfelderfassungseinrichtung 27 ermittelt dabei Gefahrinformationen für verschiedene Umfeldbereiche im Kraftfahrzeugumfeld und stellt diese für die Steuereinrichtung 25 bereit. Die Steuereinrichtung 25 steuert die Anzeigeeinrichtung 1 derart, dass die Umfeldinformationen in einem randseitigen Bereich der Anzeigeeinrichtung dargestellt werden, der einen zentralen Bereich umgibt, in dem das menügestützte Bediensystem dargestellt wird. Entsprechende Ausbildungsmöglichkeiten für die Anzeigeeinrichtung 1 sind mit Bezug zu Fig. 1 und Fig. 3 beschrieben.

Alternativ wäre es möglich, dass die Anzeigeeinrichtung 1 durch die Steuereinrichtung 25 zur Anzeige der Umfeldinformation im Hintergrund des gemeinsamen Bereichs angesteuert wird, in dem im Vordergrund, zumindest teilweise transparent, das menügeführte Bediensystem dargestellt wird. Eine Ausführungsmöglichkeit für eine entsprechende Anzeigeeinrichtung 1 wurde bereits mit Bezug zu Fig. 4 erläutert.

## Patentansprüche

1. Verfahren zur Fahrerinformation in einem Kraftfahrzeug, umfassend eine Anzeigeeinrichtung zur Darstellung einer an den Fahrer zu gebenden Fahrerinformation mit zugeordneter Steuereinrichtung, und eine Umfelderfassungseinrichtung zur Erfassung einer Umfeldinformation, **dadurch gekennzeichnet,**
**dass** die Anzeigeeinrichtung durch die Steuereinrichtung zur Anzeige der Fahrerinformation und der Umfeldinformation angesteuert wird, wobei
- entweder die Fahrerinformation in einem zentralen Bereich der Anzeigeeinrichtung und die Umfeldinformation in einem den zentralen Bereich umgebenden randseitigen Bereich der Anzeigeeinrichtung dargestellt wird,
- oder wobei die Fahrerinformation und die Umfeldinformation überlagert im gleichen gemeinsamen Bereich der Anzeigeeinrichtung dargestellt werden, wobei die Fahrerinformation zumindest teilweise transparent im Vordergrund und die Umfeldinformation als Hintergrund dargestellt wird.

2. Verfahren nach Anspruch 1,
**dadurch gekennzeichnet,**
**dass** die Umfeldinformationen für wenigstens zwei vorgegebene Umfeldbereiche des Fahrzeugumfelds jeweils eine Gefahrinformation umfassen, die insbesondere durch Erkennung von Objekten im Fahrzeugumfeld bestimmt ist, wobei jedem der Umfeldbereiche entweder ein Anzeigesegment des randseitigen Bereichs der Anzeigeeinrichtung oder, bei überlagerter Darstellung, ein Anzeigesegment des Hintergrunds zugeordnet ist, das jeweils zur Darstellung der Gefahrinformation angesteuert wird.

3. Verfahren nach Anspruch 2,
**dadurch gekennzeichnet,**
**dass** die Anzeigesegmente Winkelsegmente des randseitigen Bereichs oder, bei überlagerter Darstellung, des Hintergrunds sind und/oder dass die Anzeigesegmente Längsabschnitte des randseitigen Bereichs sind.

4. Verfahren nach Anspruch 2 oder 3,
**dadurch gekennzeichnet,**
**dass** die Gefahrinformation als Farbdarstellung und/oder durch Anpassung der Leuchtstärke im jeweiligen Anzeigesegment dargestellt wird.

5. Verfahren nach einem der vorangehenden Ansprüche,
**dadurch gekennzeichnet,**
**dass** der zentrale und der randseitige Bereich auf einem gemeinsamen Display dargestellt werden.

6. Verfahren nach Anspruch 5,
**dadurch gekennzeichnet,**
**dass** das gemeinsame Display rechteckig mit in Zeilen und Spalten angeordneten Bildpunkten ist, wobei am linken und rechten Rand des Displays jeweils eine vorgegebene Anzahl von Spalten und am oberen und unteren Rand des Displays jeweils eine vorgegebene Anzahl von Zeilen durch die Steuereinrichtung als randseitiger Bereich angesteuert werden.

7. Verfahren nach einem der Ansprüche 1 bis 4,
**dadurch gekennzeichnet,**
**dass** als Anzeigeeinrichtung eine Anzeigeeinrichtung verwendet wird, die ein zentrales, insbesondere graphikfähiges, Display und mehrere randseitig angeordnete Leuchtmittel umfasst, wobei die Fahrerinformation durch Ansteuerung des Displays und die Umfeldinformation durch Ansteuerung der randseitig angeordneten Leuchtmittel dargestellt wird.

8. Kraftfahrzeug, umfassend eine Anzeigeeinrichtung (1) zur Darstellung einer an den Fahrer zu gebenden Fahrerinformation mit zugeordneter Steuereinrichtung (25), und eine Umfelderfassungseinrichtung (27) zur Erfassung einer Umfeldinformation,
**dadurch gekennzeichnet,**
**dass** das Kraftfahrzeug (12) zur Durchführung des Verfahrens nach einem der vorangehenden Ansprüche ausgebildet ist.

9. Kraftfahrzeug nach Anspruch 8,
**dadurch gekennzeichnet,**
**dass** das Kraftfahrzeug (12) zumindest zum teilautomatisierten, insbesondere zum vollautomatisierten, Fahren ausgebildet ist.
